# EUROPEAN PATENT APPLICATION

(11) **EP 4 086 296 A1**
(43) Date of publication of application: **09.11.2022**
(21) Application number: 20908728.7
(22) Date of filing: 01.12.2020
(51) Int. Cl.: C08G 65/48

(54) **NOVEL POLY(ARYLENE ETHER) RESIN AND PREPARATION METHOD THEREFOR**

(30) Priority: 31.12.2019 CN 201911409978
(71) Applicant: Shandong Shengquan New Materials Co., Ltd., Jinan City Shandong 250204 (CN)
(72) Inventor: TANG, Lei, Jinan City Shandong 250204 (CN); DIAO, Zhaoyin, Jinan City Shandong 250204 (CN); LI, Zhifang, Jinan City Shandong 250204 (CN); LI, Xiucheng, Jinan City Shandong 250204 (CN)
(74) Representative: Jannig & Repkow Patentanwälte PartG mbB
(86) International application number: PCT/CN2020/133107
(87) International publication number: WO 2021/135789

(57) **Abstract**

The present application discloses a novel poly(arylene ether) resin, having a number average molecular weight of 1000-4000, preferably 2000-3000, and a structural formula shown in Formula (1) below. In Formula (1), R1, R2, R3, and R4 are selected from hydrogen, halogen or C₁₋C₁₂ alkyl; R5 and R6 are selected from hydrogen or methyl; R7-R9 are selected from hydrogen or C₁-C₁₈ alkyl; and m and n are integers of 1 to 50. The present application further discloses a method for preparing the novel poly(arylene ether) resin, including the following steps: adding poly(arylene ether) and a polyphenol compound to a good solvent of poly(arylene ether), then adding peroxide to carry out a first reaction, cooling the mixture after the completion of the first reaction, and pouring the obtained first reaction liquid into a poor solvent to precipitate bis(hydroxyl) poly(arylene ether); and then adding a blocking agent and a catalyst to carry out a second reaction, and after the completion of the second reaction, pouring the obtained reaction liquid into the poor solvent to precipitate the novel poly(arylene ether) resin shown in Formula (1).

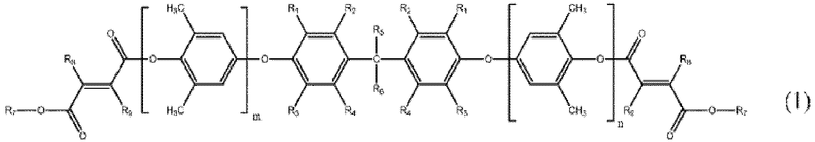

## Description

### Technical Field

The present application relates to the field of polymer synthesis, and in particular to a novel poly(arylene ether) resin and a method for preparing the same.

### Background Art

In recent years, with the continuous development of information industry, the requirements for signal transmission speed and transmission loss are getting higher and higher. Epoxy resin is the most widely used matrix resin in the traditional copper clad laminate manufacturing industry. The traditional epoxy resin has been unable to meet the needs of the technological development of electronic industry products due to its poor dimensional stability at high temperature and high dielectric constant in the high-frequency range. Therefore, the development of copper clad plates with low dielectric constant and dissipation factor has become one of the research hotspots of major copper clad plate manufacturers.

Thermoplastic poly(arylene ether) (PPE) has excellent Dk and Df. The thermoplastic poly(arylene ether) also has low hygroscopicity and good flame retardancy, and thus, is a potential base material for copper clad plates. The polymer poly(arylene ether) is a thermoplastic engineering plastic with excellent heat resistance, and has good mechanical properties and dimensional stability. However, the polymer poly(arylene ether) requires a high processing temperature and has a very high viscosity during processing, and thus it cannot be directly applied to the field of copper clad plates.

In order to solve these problems, a typical method is to reduce the molecular weight of poly(arylene ether) and link reactive groups to both ends of the poly(arylene ether), which makes the thermoplastic poly(arylene ether) become a thermosetting resin that can have a cross-linking reaction with other resins, so that the poly(arylene ether) can exert its excellent Dk and Df. Chinese patent CN109161014A discloses a preparation method for producing low-molecular-weight double-end hydroxyl poly(arylene ether). The hydroxyls at two ends can react with acids, acid anhydrides, epoxy groups and cyanates. However, the reaction with these reactive groups cannot fully exert excellent dielectric properties of the poly(arylene ether) resin.

Chinese patent CN100402582C provides an epoxy-functionalized poly(arylene ether) resin. This resin can also only react with acid anhydrides, acids and cyanates, and cannot fully exert excellent dielectric properties of the poly(arylene ether).

### Summary of the Invention

In order to solve the above problem, the present application provides a novel poly(arylene ether) resin and a method for preparing the same. The novel poly(arylene ether) has a low molecular weight. Moreover, the novel poly(arylene ether) contains unsaturated aliphatic groups and can blend and react with styrene, polybutadiene, allyl, and other unsaturated resins without introducing groups of large polarity, so that the excellent dielectric properties of the poly(arylene ether) can be fully exerted.

The specific technical solutions of the present application are as follows:
1. A novel poly(arylene ether) resin, having a number average molecular weight of 1000-4000, preferably 2000-3000, and a structural formula shown in Formula (1) below: 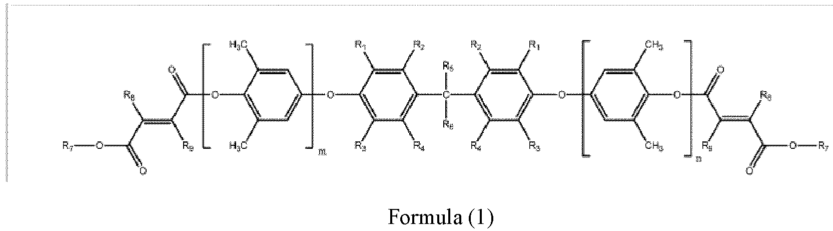 where in Formula (1), R1, R2, R3, and R4 are selected from hydrogen, halogen or C₁₋C₁₂ alkyl; R5 and R6 are selected from hydrogen or methyl; R7-R9 are selected from hydrogen or C₁₋C₁₈ alkyl; and m and n are integers of 1 to 50.
2. The novel poly(arylene ether) resin according to item 1, where the halogen is bromine or chlorine; and the C₁₋C₁₂ alkyl is C₁₋C₁₂ straight-chain alkyl or branched-chain alkyl, and
   preferably, the C₁₋C₁₂ alkyl is methyl.
3. The novel poly(arylene ether) resin according to item 1 or 2, where R7 is C₁-C₆ alkyl; and preferably, R7 is C₁-C₄ alkyl.
4. The novel poly(arylene ether) resin according to any one of items 1 to 3, where R5 and R6 are methyl.
5. The novel poly(arylene ether) resin according to any one of items 1 to 4, where the resin has an intrinsic viscosity of 0.04-0.20 dL/g, preferably 0.06-0.14 dL/g.
6. A method for preparing a novel poly(arylene ether) resin, including the following steps:
   adding poly(arylene ether) and a polyphenol compound to a good solvent of poly(arylene ether), then adding peroxide to carry out a first reaction, cooling the resulting mixture after the completion of the first reaction, and pouring the obtained first reaction liquid into a poor solvent to precipitate bis(hydroxyl) poly(arylene ether); and
   then adding a blocking agent and a catalyst to the bis(hydroxyl) poly(arylene ether) to carry out a second reaction, and after the completion of the second reaction, pouring the obtained second reaction liquid into the poor solvent to precipitate the novel poly(arylene ether) resin shown in Formula (1), 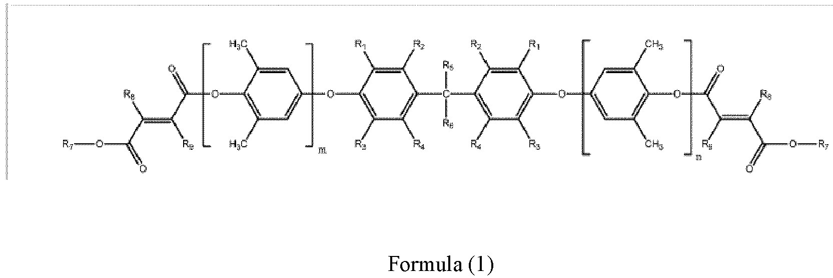
   where in Formula (1), R1, R2, R3, and R4 are selected from hydrogen, halogen or C₁₋C₁₂ alkyl; R5 and R6 are selected from hydrogen or methyl; R7-R9 are selected from hydrogen or C₁-C₁₈ alkyl; and m and n are integers of 1 to 50.
7. The method according to item 6, where the halogen is bromine or chlorine; and the C₁₋C₁₂ alkyl is C₁₋C₁₂ straight-chain alkyl or branched-chain alkyl, and
   preferably, the C₁₋C₁₂ alkyl is methyl.
8. The method according to item 7 or 8, where R7 is C₁-C₆ alkyl; and preferably, R7 is C₁-C₄ alkyl.
9. The method according to any one of items 6 to 8, where R5 and R6 are methyl.
10. The method according to any one of items 6 to 9, where the resin has an intrinsic viscosity of 0.04-0.20 dL/g, preferably 0.06-0.14 dL/g.
11. The method according to any one of items 6 to 10, where after the poly(arylene ether) and the polyphenol compound are added to the good solvent of poly(arylene ether), the peroxide is added at 50-110°C, preferably at 70-100°C, to carry out the first reaction; the resulting mixture is cooled to 0-60°C after the completion of the first reaction; and the obtained first reaction liquid is poured into the poor solvent to precipitate the bis(hydroxyl) poly(arylene ether).
12. The method according to any one of items 6 to 11, where the first reaction is carried out for 1-4 h, preferably 3 h; and further preferably, the second reaction is carried out for 1-40 h, more preferably 4-24 h.
13. The method according to any one of items 6 to 12, where when the obtained first reaction liquid is poured into the poor solvent to precipitate the bis(hydroxyl) poly(arylene ether), a volume ratio of the first reaction liquid to the poor solvent is 1:(1-10), preferably 1:(3-6); and
   preferably, when the obtained second reaction liquid is poured into the poor solvent to precipitate the novel poly(arylene ether) resin, a volume ratio of the second reaction liquid to the poor solvent is 1:(1-10), preferably 1:(3-6).
14. The method according to any one of items 6 to 13, where after the good solvent of poly(arylene ether) is heated to 80-110°C, the poly(arylene ether) and the polyphenol compound are added to the good solvent of poly(arylene ether); and then the peroxide is added at 50-110°C, preferably at 70-100°C, to carry out the first reaction.
15. The method according to any one of items 6 to 14, where the good solvent is selected from any one or two or more of toluene, chlorobenzene, chloroform, and xylene.
16. The method according to any one of items 6 to 15, where the poor solvent is selected from any one or two or more of aliphatic alcohols.
17. The method according to any one of items 6 to 16, where the polyphenol compound is selected from any one of bisphenol A, tetramethyl bisphenol A, tetramethyl dihydroxybiphenyl, dihydroxy diphenyl ether, and novolac.
18. The method according to any one of items 6 to 17, where the peroxide is selected from one or two or more of dicumyl peroxide, tert-butyl cumyl peroxide, di-tert-butyl peroxide, diisopropylbenzene hydroperoxide, tert-butyl hydroperoxide, tert-butyl peroxyacetate, tert-butylbenzene peroxide, diisobutyryl peroxide, tert-hexyl peroxy isopropyl monocarbonate, dilauroyl peroxide, tert-butyl peroxy isopropyl monocarbonate, tert-butyl peroxyacetate, tert-butyl peroxybenzoate, benzoyl peroxide or benzoyl peroxide derivatives.
19. The method according to any one of items 6 to 18, where the blocking agent is selected from any one or two or more of fumaric acid, fumaric anhydride, maleic anhydride, monomethyl fumarate, dimethyl fumarate, diethyl fumarate, and dibutyl fumarate.
20. The method according to any one of items 6 to 19, where the catalyst is selected from any one or two or more of N-ethylmorpholine, N,N'-diethylpiperazine, N,N-dimethylcyclohexylamine, bis(2-dimethylaminoethyl) ether, triethylamine, N,N-dimethylbenzylamine, N-ethylmorpholine, triethanolamine, pyridine, 4-dimethylaminopyridine, N,N'-dimethylaniline, dicyclohexylcarbodiimide, and 1-(3-dimethylaminopropyl)-3-ethylcarbodiimide hydrochloride; and preferably, the catalyst includes 4-dimethylaminopyridine.
21. The method according to any one of items 6 to 20, where a mass ratio of the polyphenol compound to the poly(arylene ether) is 1:100-25:100, preferably 5:100-20:100.
22. The method according to any one of items 6 to 21, where a mass ratio of the peroxide to the poly(arylene ether) is 1:100-15:100, preferably 1:100-10:100.
23. The method according to any one of items 6 to 22, where a mass ratio of the blocking agent to the poly(arylene ether) is 5:100-40:100, preferably 15:100-30:100.
24. The method according to any one of items 6 to 23, where a mass ratio of the catalyst to the poly(arylene ether) is 10:100-50:100, preferably 15:100-30:100.

### Beneficial effects

The novel poly(arylene ether) resin provided by the present application contains unsaturated aliphatic groups and can blend and react with styrene, polybutadiene, allyl, and other unsaturated resins without introducing groups of large polarity, so that the excellent dielectric properties of the poly(arylene ether) can be fully exerted. According to the method of the present application for preparing the novel poly(arylene ether) resin, by controlling the reaction temperature, the reaction time, the content and the type of the poor solvent added and the type of the good solvent, the peroxide, the blocking agent and the catalyst, and also controlling the ratio of the substances added to be within the range of the present application, the blocking degree of the obtained poly(arylene ether) resin is 80% or more, and even up to 99.9%.

### Detailed Description of the Invention

The present application will be described in detail below.

It should be noted that "including" or "comprising" mentioned throughout the specification and claims is an open term, and thus should be interpreted as "including but not limited to". The subsequent description of the specification is a preferred embodiment for implementing the present application. However, the description is for the purpose of illustrating the general principles of the specification and is not intended to limit the scope of the present application. The scope of the present application shall be as defined by the appended claims.

### <Novel Poly(arylene ether) Resin>

The structural formula, the number average molecular weight and the intrinsic viscosity of the novel poly(arylene ether) resin of the present application are as follows.

### (Structural formula)

The novel poly(arylene ether) resin of the present application has a structural formula (1) below:

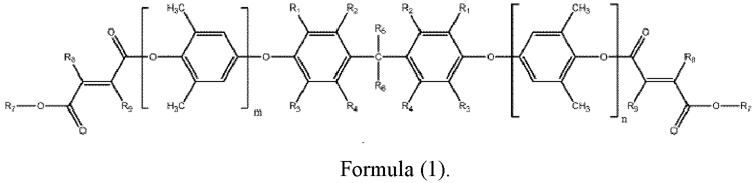

In Formula (1), R1-R9 are hydrogen or a substituent, and m and n are repeating units.

R1, R2, R3, and R4 are each independently or simultaneously hydrogen, halogen or C₁₋C₁₂ alkyl; R5 and R6 are each independently or simultaneously hydrogen or methyl; and R7-R9 are each independently or simultaneously hydrogen or C₁-C₁₈ alkyl.

The halogen may be chlorine, bromine or iodine, preferably chlorine or bromine.

The C₁₋C₁₂ alkyl is C₁₋C₁₂ straight-chain alkyl or branched-chain alkyl.

Preferably, the C₁₋C₁₂ alkyl is methyl.

Preferably, R5 and R6 are simultaneously methyl.

Preferably, R7 is independently or simultaneously C₁-C₆ alkyl; and further preferably, R7 is independently or simultaneously C₁-C₄ alkyl, for example, methyl, ethyl, n-propyl, isopropyl, n-butyl, isobutyl, sec-butyl, tert-butyl, etc.
m is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.; and n is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.

### (Number average molecular weight)

In the present application, the molecular weight distribution of the novel poly(arylene ether) resin is measured by gel permeation chromatography (GPC). A chromatography system is composed of an Agilent 1100 series system, including an isocratic pump, an autosampler, a thermostatted column compartment and a multiple wavelength detector. An elution solvent is chloroform containing 50 ppm di-n-butylamine. A sample solution is filtered through a Gelman syringe filter (0.45 µm) prior to the GPC analysis. No additional sample preparation is performed. The injection volume is 50 ml, and the flow rate of the eluent is set to 1 mL/min. The detection wavelength is set to 280 nm. Data is acquired and processed using Agilent ChemStation with integrated GPC data analysis software. The molecular weight distribution results are calibrated with a polystyrene standard. Without any correction, the results are reported as Mn/Mw. The novel poly(arylene ether) resin has a measured number average molecular weight Mn of 1000-4000 g/mol, for example, 1000-3500 g/mol, 1500-3200 g/mol, 1800-3000 g/mol, 2000-3000 g/mol, 2050-2800 g/mol, 2100-2500 g/mol, etc.

### (Intrinsic viscosity)

In the present application, in chloroform at 25°C, the intrinsic viscosity of the novel poly(arylene ether) resin that has been dried in vacuum at 125°C for 1 hour is measured. The concentration of the novel poly(arylene ether) resin in chloroform is 0.008 g/mL. The novel poly(arylene ether) resin of the present application has an intrinsic viscosity of 0.04-0.20 dL/g, preferably 0.06-0.14 dL/g, further preferably 0.07-0.13 dL/g, more preferably 0.08-0.125 dL/g, most preferably 0.1-0.12 dL/g, for example, 0.04 dL/g, 0.05 dL/g, 0.06 dL/g, 0.07 dL/g, 0.08 dL/g, 0.09 dL/g, 0.1 dL/g, 0.11 dL/g, 0.12 dL/g, 0.13 dL/g, 0.14 dL/g, 0.15 dL/g, 0.16 dL/g, 0.17 dL/g, 0.18 dL/g, 0.19 dL/g, 0.20 dL/g, etc. The novel poly(arylene ether) resin having the intrinsic viscosity within the scope of the present application can be better miscible with epoxy resins and hydrocarbon resins, and is suitable for the production process of printed circuit boards.

### <Preparation Method of Novel Poly(arylene ether) Resin>

The method for preparing the novel poly(arylene ether) resin of the present application includes the following two steps.
(1) Poly(arylene ether) and a polyphenol compound are added to a good solvent of poly(arylene ether); then peroxide is added to carry out a first reaction; the resulting mixture is cooled after the completion of the first reaction; and the obtained first reaction liquid is poured into a poor solvent to precipitate bis(hydroxyl) poly(arylene ether).
(2) A blocking agent and a catalyst are added to the bis(hydroxyl) poly(arylene ether) to carry out a second reaction; and after the completion of the second reaction, the obtained second reaction liquid is poured into the poor solvent to precipitate the novel poly(arylene ether) resin shown in Formula (1),

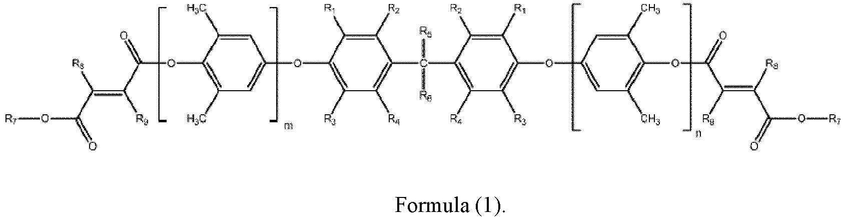

In Formula (1), R1, R2, R3, and R4 are selected from hydrogen, halogen or C₁₋C₁₂ alkyl; R5 and R6 are selected from hydrogen or methyl; R7-R9 are selected from hydrogen or C₁-C₁₈ alkyl; and m and n are integers of 1 to 50.

### (Step of generation of bis(hydroxyl) poly(arylene ether))

The "good solvent" in the present application refers to a solvent that has a strong dissolving ability for a polymer solute and whose interaction parameter χ with the polymer solute is less than 0.5. Specifically, the good solvent may be selected from any one or two or more of toluene, chlorobenzene, chloroform and xylene, but is not limited thereto, preferably including one or two of toluene and xylene, further preferably including toluene.

The polyphenol compound may be selected from any one of bisphenol A, tetramethyl bisphenol A, tetramethyl dihydroxybiphenyl, dihydroxy diphenyl ether, and novolac, but is not limited thereto. The novolac includes condensate of phenol and formaldehyde and condensate of cresol and formaldehyde. The polyphenol compound is preferably tetramethyl bisphenol A or bisphenol A, further preferably bisphenol A.

Preferably, a mass ratio of the polyphenol compound to the poly(arylene ether) is 1:100-25:100, for example, 1:100, 2:100, 3:100, 4:100, 5:100, 6:100, 7:100, 8:100, 9:100, 10:100, 11:100, 12:100, 13:100, 14:100, 15:100, 16:100, 17:100, 18:100, 19:100, 20:100, 21:100, 22:100, 23: 100, 24:100, 25:100, etc., further preferably 5:100-20:100.

The peroxide is selected from one or two or more of dicumyl peroxide, tert-butyl cumyl peroxide, di-tert-butyl peroxide, diisopropylbenzene hydroperoxide, tert-butyl hydroperoxide, tert-butyl peroxyacetate, tert-butylbenzene peroxide, diisobutyryl peroxide, tert-hexyl peroxy isopropyl monocarbonate, dilauroyl peroxide, tert-butyl peroxy isopropyl monocarbonate, tert-butyl peroxyacetate, tert-butyl peroxybenzoate, benzoyl peroxide or benzoyl peroxide derivatives, but is not limited thereto. The peroxide is preferably selected from one or two or more of diisopropylbenzene hydroperoxide, tert-butyl hydroperoxide, dilauroyl peroxide and benzoyl peroxide, and further preferably includes dilauroyl peroxide.

Preferably, a mass ratio of the peroxide to the poly(arylene ether) is 1:100-15:100, for example, 1:100, 2:100, 3:100, 4:100, 5:100, 6:100, 7:100, 8:100, 9:100, 10:100, 11:100, 12:100, 13:100, 14:100, 15:100, etc., further preferably 1:100-10:100.

Preferably, after the poly(arylene ether) and the polyphenol compound are added to the good solvent of poly(arylene ether), the peroxide is added at 50-110°C, for example, 50°C, 55°C, 60°C, 65°C, 70°C, 75°C, 80°C, 85°C, 90°C, 95°C, 100°C, 105°C, 110°C, etc., further preferably at 70-100°C, to carry out the first reaction. After the completion of the first reaction, the resulting mixture is cooled to 0-60°C, for example, 0°C, 5°C, 10°C, 15°C, 20°C, 25°C, 30°C, 35°C, 40°C, 45°C, 50°C, 55°C, 60°C, etc., preferably to room temperature. The obtained first reaction liquid is poured into the poor solvent to precipitate the bis(hydroxyl) poly(arylene ether).

Preferably, the first reaction is carried out for 1-4 h, for example, 1 h, 1.5 h, 2 h, 2.5 h, 3 h, 3.5 h, 4 h, etc., more preferably 3 h.

Preferably, after the obtained first reaction liquid is poured into the poor solvent to precipitate a substance, the substance is filtered, and the substance is dried to obtain the bis(hydroxyl) poly(arylene ether).

The "poor solvent" in the present application refers to a solvent that has a weak dissolving ability for a polymer solute and whose interaction parameter χ with the polymer solute is close to or greater than 0.5. Specifically, the poor solvent may be selected from any one or a combination of aliphatic alcohols, and may be further selected from any one or two or more of methanol, ethanol, propanol and isobutanol.

A volume ratio of the first reaction liquid to the poor solvent is 1:(1-10), for example, 1:1, 1:2, 1:3, 1:4, 1:5, 1:6, 1:7, 1:8, 1:9, 1:10, etc., preferably 1:(3-6).

In the present application, the molecular weight distribution of the bis(hydroxyl) poly(arylene ether) is measured by gel permeation chromatography (GPC). The measurement method is the same as the measurement method of the molecular weight distribution of the novel poly(arylene ether) resin above. The bis(hydroxyl) poly(arylene ether) has a measured number average molecular weight Mn of 1000-4000 g/mol, for example, 1000-3500 g/mol, 1500-3200 g/mol, 1800-3000 g/mol, 2000-3000 g/mol, 2050-2800 g/mol, 2100-2500 g/mol, etc.

In the present application, in chloroform at 25°C, the intrinsic viscosity of the bis(hydroxyl) poly(arylene ether) that has been dried in vacuum at 125°C for 1 hour is measured. The concentration of the bis(hydroxyl) poly(arylene ether) in chloroform is 0.008 g/mL. The bis(hydroxyl) poly(arylene ether) of the present application has an intrinsic viscosity of 0.04-0.20 dL/g, for example, 0.04 dL/g, 0.05 dL/g, 0.06 dL/g, 0.07 dL/g, 0.08 dL/g, 0.09 dL/g, 0.1 dL/g, 0.11 dL/g, 0.12 dL/g, 0.13 dL/g, 0.14 dL/g, 0.15 dL/g, 0.16 dL/g, 0.17 dL/g, 0.18 dL/g, 0.19 dL/g, 0.20 dL/g, etc., preferably 0.06-0.14 dL/g, further preferably 0.07-0.13 dL/g, more preferably 0.08-0.125 dL/g, most preferably 0.1-0.12 dL/g.

### (Step of blocking)

In the present application, the blocking means that: terminal hydroxyls on the unblocked bis(hydroxyl) poly(arylene ether) generated above are functionalized through the reaction with a blocking agent to finally obtained the novel blocked poly(arylene ether) resin. The blocking degree (blocking rate) of the novel poly(arylene ether) resin is determined by jointly characterizing the number of terminal hydroxyls in the bis(hydroxyl) poly(arylene ether) before blocking and the content of terminal hydroxyls in the novel poly (arylene ether) resin after blocking. The number of terminal hydroxyls is measured by Fourier transform infrared spectroscopy (FT-IR). A sample of the bis(hydroxyl) poly(arylene ether) is prepared by weighing 0.30 g of bis(hydroxyl) poly(arylene ether) powder and dissolving it in 25 ml of carbon bisulfide. The absorption value of the bis(hydroxyl) poly(arylene ether)-carbon dioxide solution at 3610cm⁻¹ is measured, and the content A of terminal hydroxyls in the bis(hydroxyl) poly(arylene ether) is obtained through calculation. A sample of the novel poly(arylene ether) resin is prepared by weighing 0.30 g of novel poly(arylene ether) resin and dissolving it in 25 ml of carbon bisulfide. The absorption value of the novel poly(arylene ether) resin-carbon dioxide solution at 3610cm⁻¹ is measured, and the content B of terminal hydroxyls in the novel poly(arylene ether) resin is obtained through calculation. The blocking rate of the obtained novel poly(arylene ether) resin=(A-B)/A^{∗}100%, where A is the content of terminal hydroxyls in the bishydroxyl polyphenylene ether, in ppm, and B is the content of hydroxyls in the novel poly(arylene ether) resin obtained after the blocking reaction, in ppm.

The blocking agent may be selected from any one or two or more of fumaric acid, maleic anhydride, fumaric anhydride, monomethyl fumarate, dimethyl fumarate, diethyl fumarate and dibutyl fumarate, but is not limited thereto, preferably including maleic anhydride.

Preferably, a mass ratio of the blocking agent to the poly(arylene ether) is 5:100-40:100, for example, 5:100, 8:100, 10:100, 12:100, 14:100, 16:100, 18:100, 20:100, 22:100, 24:100, 26:100, 28:100, 30:100, 32:100, 34:100, 36:100, 40:100, etc., further preferably 15:100-30:100.

The catalyst may be selected from any one or two or more of N-ethylmorpholine, N,N'-diethylpiperazine, N,N-dimethylcyclohexylamine, bis(2-dimethylaminoethyl) ether, triethylamine, N,N-dimethylbenzylamine, N-ethylmorpholine, triethanolamine, pyridine, 4-dimethylaminopyridine, N,N'-dimethylaniline, dicyclohexylcarbodiimide and 1-(3-dimethylaminopropyl)-3-ethylcarbodiimide hydrochloride, but is not limited thereto, preferably including pyridine, further preferably including 4-dimethylaminopyridine, and more further including 4-dimethylaminopyridine and N,N-dimethylcyclohexylamine.

Preferably, a mass ratio of the catalyst to the poly(arylene ether) is 10:100-50:100, for example, 10:100, 12:100, 14:100, 16:100, 18:100, 20:100, 22:100, 24:100, 26:100, 28:100, 30:100, 32:100, 34:100, 36:100, 38:100, 40:100, 42:100, 44:100, 46:100, 48:100, 50:100, etc., further preferably 15:100-30:100.

The second reaction is carried out for 1-40 h, for example, 1 h, 2 h, 4 h, 6 h, 8 h, 10 h, 12 h, 14 h, 16 h, 18 h, 20 h, 22 h, 24 h, 26 h, 28 h, 30 h, 32 h, 34 h, 36 h, 38 h, 40 h, etc., preferably 4-24 h.

Preferably, the blocking agent and the catalyst are added at 0-60°C, for example, 0°C, 10°C, 20°C, 30°C, 40°C, 50°C, 60°C, etc., to the bis(hydroxyl) poly(arylene ether) to carry out the second reaction. After the completion of the second reaction, the obtained second reaction liquid is poured into the poor solvent to precipitate the novel poly(arylene ether) resin shown in Formula (1).

In Formula (1), R1-R9 are hydrogen or a substituent, and m and n are repeating units.

R1, R2, R3, and R4 are each independently or simultaneously hydrogen, halogen or C₁₋C₁₂ alkyl; R5 and R6 are each independently or simultaneously hydrogen or methyl; and R7-R9 are each independently or simultaneously hydrogen or C₁-C₁₈ alkyl.

The halogen may be chlorine, bromine or iodine, preferably chlorine or bromine.

The C₁₋C₁₂ alkyl is C₁₋C₁₂ straight-chain alkyl or branched-chain alkyl.

Preferably, the C₁₋C₁₂ alkyl is methyl.

Preferably, R5 and R6 are simultaneously methyl.

Preferably, R7 is independently or simultaneously C₁-C₆ alkyl; and further preferably, R7 is independently or simultaneously C₁-C₄ alkyl, for example, methyl, ethyl, n-propyl, isopropyl, n-butyl, isobutyl, sec-butyl, tert-butyl, etc.

m is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.; and n is an integer of 1 to 50, for example, 1, 2, 3, 4, 5, 6, 7, 8, 9, 10, 11, 12, 13, 14, 15, 16, 18, 20, 22, 25, 27, 30, 32, 35, 37, 40, 42, 45, 47, 50, etc.

In the present application, in chloroform at 25 °C, the intrinsic viscosity of the novel poly(arylene ether) resin that has been dried in vacuum at 125°C for 1 hour is measured. The concentration of the novel poly(arylene ether) resin in chloroform is 0.008 g/mL. The novel poly(arylene ether) resin obtained by the preparation method of the present application has an intrinsic viscosity of 0.04-0.20 dL/g, preferably 0.06-0.14 dL/g, further preferably 0.07-0.13 dL/g, more preferably 0.08-0.125 dL/g, most preferably 0.1-0.12 dL/g, for example, 0.04 dL/g, 0.05 dL/g, 0.06 dL/g, 0.07 dL/g, 0.08 dL/g, 0.09 dL/g, 0.1 dL/g, 0.11 dL/g, 0.12 dL/g, 0.13 dL/g, 0.14 dL/g, 0.15 dL/g, 0.16 dL/g, 0.17 dL/g, 0.18 dL/g, 0.19 dL/g, 0.20 dL/g, etc. The novel poly(arylene ether) resin having the intrinsic viscosity within the scope of the present application, which is obtained by the preparation method of the present application, can be better miscible with epoxy resins and hydrocarbon resins, and is suitable for the production process of printed circuit boards.

The poor solvent may be selected from one or a combination of methanol, ethanol, propanol and isobutanol. A volume ratio of the second reaction liquid to the poor solvent is 1:(1-10), for example, 1:1, 1:2, 1:3, 1:4, 1:5, 1:6, 1:7, 1:8, 1:9, 1:10, etc., preferably 1:(3-6).

### Examples

In the following specific examples, all materials and reagents are commercially available unless otherwise specified.

### Synthesis of bis(hydroxyl) poly(arylene ether)

### Reference Example 1

500 g of toluene was added to a four-neck reaction vessel as a solvent and heated to 90°C. 100 g of raw material poly(arylene ether) (Sabic, trade name: PPO646) having a number average molecular weight of 21000 g/mol and 6 g of bisphenol A (BPA) serving as a polyphenol compound were dissolved in the solvent. The resulting mixture was cooled to 80°C, and 12 g of 50% (mass fraction) solution of diisopropylbenzene hydroperoxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 2

500 g of toluene was added to a four-neck reaction vessel as a solvent and heated to 90°C. 100 g of raw material poly(arylene ether) (Sabic, trade name: PPO646) having a number average molecular weight of 21000 g/mol and 6 g of bisphenol A (BPA) serving as a polyphenol compound were dissolved in the solvent. The resulting mixture was cooled to 80°C, and 12 g of 50% (mass fraction) solution of tert-butyl hydroperoxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 3

500 g of toluene was added to a four-neck reaction vessel as a solvent and heated to 90°C. 100 g of raw material poly(arylene ether) (Sabic, trade name: PPO646) having a number average molecular weight of 21000 g/mol and 6 g of bisphenol A (BPA) serving as a polyphenol compound were dissolved in the solvent. The resulting mixture was cooled to 80°C, and 12 g of 50% (mass fraction) solution of dilauroyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 4

500 g of toluene was added to a four-neck reaction vessel as a solvent and heated to 90°C. 100 g of raw material poly(arylene ether) (Sabic, trade name: PPO646) having a number average molecular weight of 21000 g/mol and 6 g of bisphenol A (BPA) serving as a polyphenol compound were dissolved in the solvent. The resulting mixture was cooled to 80°C, and 12 g of 50% (mass fraction) solution of benzoyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 5

500 g of toluene was added to a four-neck reaction vessel as a solvent and heated to 90°C. 100 g of raw material poly(arylene ether) (Sabic, trade name: PPO646) having a number average molecular weight of 21000 g/mol and 3 g of bisphenol A (BPA) serving as a polyphenol compound were dissolved in the solvent. The resulting mixture was cooled to 80°C, and 6 g of 50% (mass fraction) solution of dilauroyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 6

500 g of toluene was added to a four-neck reaction vessel as a solvent and heated to 90°C. 100 g of raw material poly(arylene ether) (Sabic, trade name: PPO646) having a number average molecular weight of 21000 g/mol and 9 g of bisphenol A (BPA) serving as a polyphenol compound were dissolved in the solvent. The resulting mixture was cooled to 80°C, and 18 g of 50% (mass fraction) solution of dilauroyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Example 7

500 g of toluene was added to a four-neck reaction vessel as a solvent and heated to 90°C. 100 g of raw material poly(arylene ether) (Sabic, trade name: PPO646) having a number average molecular weight of 21000 g/mol and 15 g of bisphenol A (BPA) serving as a polyphenol compound were dissolved in the solvent. The resulting mixture was cooled to 80°C, and 18 g of 50% (mass fraction) solution of dilauroyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Comparative Example 1

500 g of toluene was added to a four-neck reaction vessel as a solvent and heated to 90°C. 100 g of raw material poly(arylene ether) (Sabic, trade name: PPO646) having a number average molecular weight of 21000 g/mol and 30 g of bisphenol A (BPA) serving as a polyphenol compound were dissolved in the solvent. The resulting mixture was cooled to 80°C, and 35 g of 50% (mass fraction) solution of dilauroyl peroxide in toluene was dropwise added for 60 min. The reaction was carried out for 3 h. After the completion of the reaction, the reaction liquid was cooled to room temperature. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

### Reference Comparative Example 2

500 g of toluene was added to a four-neck reaction vessel as a solvent and heated to 120°C. 100 g of raw material poly(arylene ether) (Sabic, trade name: PPO646) having a number average molecular weight of 21000 g/mol and 15 g of bisphenol A (BPA) serving as a polyphenol compound were dissolved in the solvent. At 115°C, 18 g of 50% (mass fraction) solution of dilauroyl peroxide in toluene was dropwise added for 60 min. The reaction was carried out for 3 h. After the completion of the reaction, the reaction liquid was cooled to 70°C. A small amount of the reaction liquid was taken and added to methanol for precipitation. The precipitate was filtered, and the filtered precipitate was dried in a vacuum oven at 60°C for 2 h to obtain the bis(hydroxyl) poly(arylene ether).

The experimental conditions and the parameters of the synthesized bis(hydroxyl) poly(arylene ether) of Reference Examples 1-7 and Reference Comparative Examples 1-2 are listed in Table 1 below.

**Table 1**

| No. | Polyphenol compound | Peroxide | Intrinsic viscosity of bis(hydroxyl) poly(arylene ether) (dL/g) | Mn/Mw of bis(hydroxyl) poly(arylene ether) | Content of terminal hydroxyls in bis(hydroxyl) poly(arylene ether) (ppm) |
|---|---|---|---|---|---|
| Reference Example 1 | 6 g of bisphenol A | 6 g of diisopropylbenzene hydroperoxide | 0.186 | 7997/22960 | 6350 |
| Reference Example 2 | 6 g of bisphenol A | 6 g of tert-butyl hydroperoxide | 0.235 | 9325/28250 | 5890 |
| Reference Example 3 | 6 g of bisphenol A | 6 g of dilauroyl peroxide | 0.156 | 4665/14350 | 7900 |
| Reference Example 4 | 6 g of bisphenol A | 6 g of benzoyl peroxide | 0.168 | 5665/17360 | 7340 |
| Reference Example 5 | 3 g of bisphenol A | 3 g of dilauroyl peroxide | 0.173 | 6227/18340 | 4590 |
| Reference Example 6 | 9 g of bisphenol A | 9 g of dilauroyl peroxide | 0.115 | 2670/6329 | 13570 |
| Reference Example 7 | 15 g of bisphenol A | 9 g of dilauroyl peroxide | 0.093 | 2107/5643 | 18900 |
| Reference Comparative Example 1 | 30 g of bisphenol A | 17.5 g of dilauroyl peroxide | 0.055 | 1056/2480 | 28060 |
| Reference Comparative Example 2 | 15 g of bisphenol A | 9 g of dilauroyl peroxide | 0.069 | 1463/3408 | 25430 |

### Blocking experiment

### Blocking Example 1

On the basis of Reference Example 6, the blocking experiment was continued. The temperature was reduced to 50°C. 25 g of maleic anhydride and 2.5 g of pyridine were added to the reaction vessel. 30 g of 50% solution of N,N-dimethylcyclohexylamine in toluene was dropwise added to the reaction vessel, and the reaction was carried out for 24 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 2

The reaction time was set to 12 h, and the rest were the same as in the Blocking Example 1.

### Blocking Example 3

The reaction time was set to 6 h, and the rest were the same as in the Blocking Example 1. Blocking Example 4

The reaction temperature was set to 30°C, and the rest were the same as in the Blocking Example 1.

### Blocking Example 5

On the basis of Reference Example 6, the blocking experiment was continued. The temperature was reduced to 30°C. 25 g of maleic anhydride and 2.5 g of dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 6

On the basis of Reference Example 6, the blocking experiment was continued. The temperature was reduced to 30°C. 25 g of fumaric acid and 2.5 g of 4-dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 7

On the basis of Reference Example 6, the blocking experiment was continued. The temperature was reduced to 30°C. 25 g of dimethyl fumarate and 2.5 g of 4-dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 8

On the basis of Reference Example 6, the blocking experiment was continued. The temperature was reduced to 30°C. 25 g of dimethyl fumarate and 2.5 g of dicyclohexylcarbodiimide were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 9

On the basis of Reference Example 6, the blocking experiment was continued. The temperature was reduced to 30°C. 10 of dimethyl fumarate and 2.5 g of dicyclohexylcarbodiimide were added to the reaction vessel. 16 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 10

On the basis of Reference Example 7, the blocking experiment was continued. The temperature was reduced to 30°C. 25 g of maleic anhydride and 2.5 g of 4-dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 11

On the basis of Reference Comparative Example 1, the blocking experiment was continued. The temperature was reduced to 30°C. 25 g of maleic anhydride and 2.5 g of 4-dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Example 12

On the basis of Reference Comparative Example 2, the blocking experiment was continued. The temperature was reduced to 30°C. 25 g of maleic anhydride and 2.5 g of 4-dimethylaminopyridine were added to the reaction vessel. 30 g of 50% solution of N,N-dimethylcyclohexylamine in toluene was dropwise added to the reaction vessel, and the reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

### Blocking Comparative Example 1

On the basis of Reference Example 6, the blocking experiment was continued. The temperature was reduced to 30°C. 25 g of acrylic acid and 17.5 g of dimethylbutylamine were added to the reaction vessel. The reaction was carried out for 6 h. Then the reaction liquid was added to ethanol for precipitation. The precipitate was filtered, and the filtered precipitate was dried in a vacuum oven at 60°C for 2 h to obtain the novel poly(arylene ether) resin.

The experimental conditions and the blocking rates of the finally generated novel poly(arylene ether) resins of Blocking Examples 1-12 and Blocking Comparative Example 1 are listed in Table 2 below.

**Table 2**

| No. | Temperat ure | Reaction time | Blocking agent | Catalyst | Blocking rate % |
|---|---|---|---|---|---|
| Blocking Example 1 | 50°C | 24 h | 25 g of maleic anhydride | 2.5 g of pyridine, 15 g of N,N-dimethylcyclohexylamine | 99.7 |
| Blocking Example 2 | 50°C | 12 h | 25 g of maleic anhydride | 2.5 g of pyridine, 15 g of N,N-dimethylcyclohexylamine | 99.6 |
| Blocking Example 3 | 50°C | 6 h | 25 g of maleic anhydride | 2.5 g of pyridine, 15 g of N,N-dimethylcyclohexylamine | 90.6 |
| Blocking Example 4 | 30°C | 24 h | 25 g of maleic anhydride | 2.5 g of pyridine, 15 g of N,N-dimethylcyclohexylamine | 99.7 |
| Blocking Example 5 | 30°C | 6 h | 25 g of maleic anhydride | 2.5 g of 4-dimethylaminopyridine, 15 g of N,N-dimethylcyclohexylamine | 99.9 |
| Blocking Example 6 | 30°C | 6 h | 25 g of fumaric acid | 2.5 g of 4-dimethylaminopyridine, 15 g of N,N-dimethylcyclohexylamine | 85.2 |
| Blocking Example 7 | 30°C | 6 h | 25 g of dimethyl fumarate | 2.5 g of 4-dimethylaminopyridine, 15 g of N,N-dimethylcyclohexylamine | 90.5 |
| Blocking Example 8 | 30°C | 6 h | 25 g of dimethyl fumarate | 2.5 g of dicyclohexylcarbodiimide, 15 g of N,N-dimethylcyclohexylamine | 80.4 |
| Blocking Example 9 | 30°C | 6 h | 10 g of dimethyl fumarate | 2.5 g of dicyclohexylcarbodiimide, 8 g of N,N-dimethylcyclohexylamine | 60.2 |
| Blocking Example 10 | 30°C | 6 h | 25 g of maleic anhydride | 2.5 g of 4-dimethylaminopyridine, 15 g of N,N-dimethylcyclohexylamine | 100 |
| Blocking Example 11 | 30°C | 6 h | 25 g of maleic anhydride | 2.5 g of 4-dimethylaminopyridine, 15 g of N,N-dimethylcyclohexylamine | 96.3 |
| Blocking Example 12 | 30°C | 6 h | 25 g of maleic anhydride | 2.5 g of 4-dimethylaminopyridine, 15 g of N,N-dimethylcyclohexylamine | 93.5 |
| Blocking Comparative Example 1 | 30°C | 6 h | 25 g of acrylic acid | 17.5 g of dimethylbutylamine | 5.8 |

As can be seen from the data results of Table 2, the catalyst including the 4-dimethylaminopyridine had higher catalytic efficiency, and the reaction could be completed within 6 h. The use of the blocking agent including the maleic anhydride could obtain a higher blocking rate.

The structural formulas of the finally obtained blocking examples and blocking comparative example are shown below.

Blocking Examples 1-6 and 10-12 have the structure shown in Formula (I) below, where R1-R4 are all hydrogen:

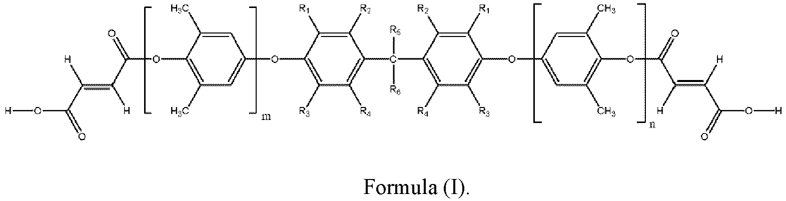

Blocking Examples 7-9 have the structure shown in Formula (II) below, where R1-R4 are all hydrogen:

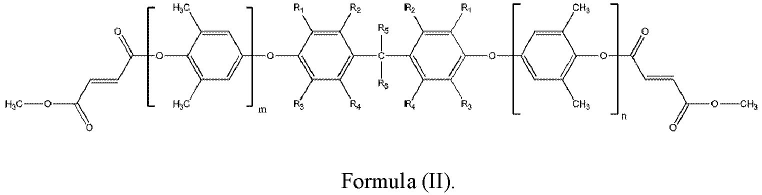

Blocking Comparative Example 1 has the structure shown in Formula (III) below:

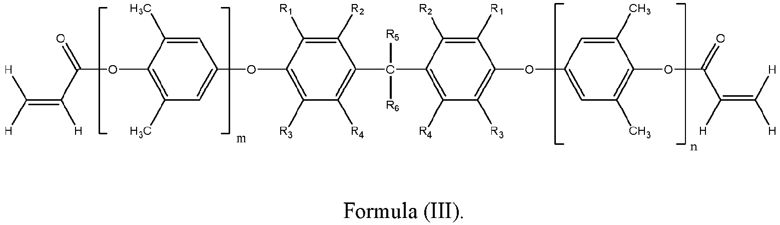

The above are only preferred examples of the present application, and are not intended to limit the present application in other forms. Any person skilled in the art can make changes or modifications to the technical content disclosed above to obtain equivalent examples of equivalent variations. However, any simple changes, equivalent variations and modifications made to the above examples according to the technical essence of the present application without departing from the content of the technical solutions of the present application shall all fall within the protection scope of the technical solutions of the present application.

## Claims

1. A novel poly(arylene ether) resin, having a number average molecular weight of 1000-4000, preferably 2000-3000, and a structural formula shown in Formula (1) below: 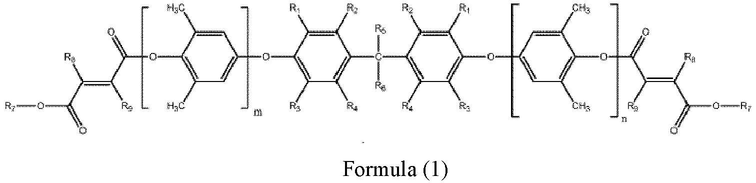 wherein in Formula (1), R1, R2, R3, and R4 are selected from hydrogen, halogen or C₁₋C₁₂ alkyl; R5 and R6 are selected from hydrogen or methyl; R7-R9 are selected from hydrogen or C₁-C₁₈ alkyl; and m and n are integers of 1 to 50.

2. The novel poly(arylene ether) resin according to claim 1, wherein the halogen is bromine or chlorine; and the C₁₋C₁₂ alkyl is C₁₋C₁₂ straight-chain alkyl or branched-chain alkyl, and
preferably, the C₁₋C₁₂ alkyl is methyl.

3. The novel poly(arylene ether) resin according to claim 1 or 2, wherein R7 is C₁-C₆ alkyl; and preferably, R7 is C₁-C₄ alkyl.

4. The novel poly(arylene ether) resin according to any one of claims 1 to 3, wherein R5 and R6 are methyl.

5. The novel poly(arylene ether) resin according to any one of claims 1 to 4, wherein the resin has an intrinsic viscosity of 0.04-0.20 dL/g, preferably 0.06-0.14 dL/g.

6. A method for preparing a novel poly(arylene ether) resin, comprising the following steps:
adding poly(arylene ether) and a polyphenol compound to a good solvent of poly(arylene ether), then adding peroxide to carry out a first reaction, cooling the resulting mixture after the completion of the first reaction, and pouring the obtained first reaction liquid into a poor solvent to precipitate bis(hydroxyl) poly(arylene ether); and
then adding a blocking agent and a catalyst to the bis(hydroxyl) poly(arylene ether) to carry out a second reaction, and after the completion of the second reaction, pouring the obtained second reaction liquid into the poor solvent to precipitate the novel poly(arylene ether) resin shown in Formula (1), 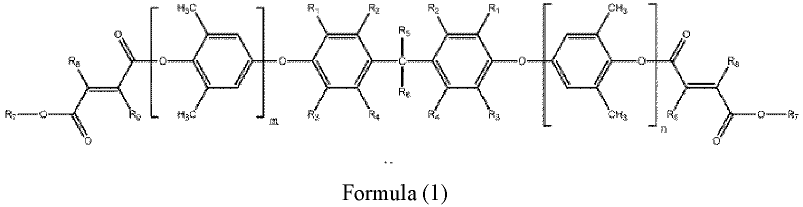
wherein in Formula (1), R1, R2, R3, and R4 are selected from hydrogen, halogen or C₁₋C₁₂ alkyl; R5 and R6 are selected from hydrogen or methyl; R7-R9 are selected from hydrogen or C₁-C₁₈ alkyl; and m and n are integers of 1 to 50.

7. The method according to claim 6, wherein the halogen is bromine or chlorine; and the C₁₋C₁₂ alkyl is C₁₋C₁₂ straight-chain alkyl or branched-chain alkyl, and
preferably, the C₁₋C₁₂ alkyl is methyl.

8. The method according to claim 7 or 8, wherein R7 is C₁-C₆ alkyl; and preferably, R7 is C₁-C₄ alkyl.

9. The method according to any one of claims 6 to 8, wherein R5 and R6 are methyl.

10. The method according to any one of claims 6 to 9, wherein the resin has an intrinsic viscosity of 0.04-0.20 dL/g, preferably 0.06-0.14 dL/g.

11. The method according to any one of claims 6 to 10, wherein after the poly(arylene ether) and the polyphenol compound are added to the good solvent of poly(arylene ether), the peroxide is added at 50-110°C, preferably at 70-100°C, to carry out the first reaction; the resulting mixture is cooled to 0-60°C after the completion of the first reaction; and the obtained first reaction liquid is poured into the poor solvent to precipitate the bis(hydroxyl) poly(arylene ether).

12. The method according to any one of claims 6 to 11, wherein the first reaction is carried out for 1-4 h, preferably 3 h; and further preferably, the second reaction is carried out for 1-40 h, more preferably 4-24 h.

13. The method according to any one of claims 6 to 12, wherein when the obtained first reaction liquid is poured into the poor solvent to precipitate the bis(hydroxyl) poly(arylene ether), a volume ratio of the first reaction liquid to the poor solvent is 1:(1-10), preferably 1:(3-6); and
preferably, when the obtained second reaction liquid is poured into the poor solvent to precipitate the novel poly(arylene ether) resin, a volume ratio of the second reaction liquid to the poor solvent is 1:(1-10), preferably 1:(3-6).

14. The method according to any one of claims 6 to 13, wherein after the good solvent of poly(arylene ether) is heated to 50-110°C, the poly(arylene ether) and the polyphenol compound are added to the good solvent of poly(arylene ether); and then the peroxide is added at 50-110°C, preferably at 70-100°C, to carry out the first reaction.

15. The method according to any one of claims 6 to 14, wherein the good solvent is selected from any one or two or more of toluene, chlorobenzene, chloroform, and xylene.

16. The method according to any one of claims 6 to 15, wherein the poor solvent is selected from any one or two or more of fatty alcohols.

17. The method according to any one of claims 6 to 16, wherein the polyphenol compound is selected from any one of bisphenol A, tetramethyl bisphenol A, tetramethyl dihydroxybiphenyl, dihydroxy diphenyl ether, novolac, and cresol novolac.

18. The method according to any one of claims 6 to 17, wherein the peroxide is selected from one or two or more of dicumyl peroxide, tert-butyl cumyl peroxide, di-tert-butyl peroxide, diisopropylbenzene hydroperoxide, tert-butyl hydroperoxide, tert-butyl peroxyacetate, tert-butylbenzene peroxide, diisobutyryl peroxide, tert-hexyl peroxy isopropyl monocarbonate, dilauroyl peroxide, tert-butyl peroxy isopropyl monocarbonate, tert-butyl peroxyacetate, tert-butyl peroxybenzoate, benzoyl peroxide or benzoyl peroxide derivatives.

19. The method according to any one of claims 6 to 18, wherein the blocking agent is selected from any one or two or more of fumaric acid, fumaric anhydride, maleic anhydride, monomethyl fumarate, dimethyl fumarate, diethyl fumarate, and dibutyl fumarate.

20. The method according to any one of claims 6 to 19, wherein the catalyst is selected from any one or two or more of N-ethylmorpholine, N,N'-diethylpiperazine, N,N-dimethylcyclohexylamine, bis(2-dimethylaminoethyl) ether, triethylamine, N,N-dimethylbenzylamine, N-ethylmorpholine, triethanolamine, pyridine, 4-dimethylaminopyridine, N,N'-dimethylaniline, dicyclohexylcarbodiimide, and 1-(3-dimethylaminopropyl)-3-ethylcarbodiimide hydrochloride; and preferably, the catalyst comprises 4-dimethylaminopyridine.

21. The method according to any one of claims 6 to 20, wherein a mass ratio of the polyphenol compound to the poly(arylene ether) is 1:100-25:100, preferably 5:100-20:100.

22. The method according to any one of claims 6 to 21, wherein a mass ratio of the peroxide to the poly(arylene ether) is 1:100-15:100, preferably 1:100-10:100.

23. The method according to any one of claims 6 to 22, wherein a mass ratio of the blocking agent to the poly(arylene ether) is 5:100-40:100, preferably 15:100-30:100.

24. The method according to any one of claims 6 to 23, wherein a mass ratio of the catalyst to the poly(arylene ether) is 10:100-50:100, preferably 15:100-30:100.
